# EUROPEAN PATENT APPLICATION

(11) **EP 1 950 663 A1**
(43) Date of publication of application: **30.07.2008**
(21) Application number: 06805121.8
(22) Date of filing: 31.10.2006
(51) Int. Cl.: G06F 12/14

(54) **A METHOD FOR IDENTIFYING UNKNOWN VIRUS AND DELETING IT**

(30) Priority: 16.11.2005 CN 200510114945; 15.02.2006 CN 200610007610
(71) Applicant: Bai, Jie, Beijing 100089 (CN); Li, Wei, Beijing 100089 (CN); Lu, Zhengyu, Beijing 100080 (CN)
(72) Inventor: Bai, Jie, Beijing 100089 (CN); Li, Wei, Beijing 100089 (CN); Lu, Zhengyu, Beijing 100080 (CN)
(74) Representative: Thoma, Michael
(86) International application number: PCT/CN2006/002920
(87) International publication number: WO 2007/056933

(57) **Abstract**

A method for identifying unknown virus program, includes: getting the behavior data of the program that would be tested, determining whether the said program is a virus program or not based on the behavior data of said program and the behavior data of pre-setting typical virus program. A method for deleting the virus program, according to the behavior of the virus program, sets and performs an anti-operation which is in reversed to the virus program, and gets back the destroyed data.

## Description

The application claims priorities from the Chinese patent application No. 200510114945.7 submitted with the State Intellectual Property Office of P.R.C. (SIPO) on November 16, 2005, and the Chinese patent application No. 200610007610.X submitted with SIPO on February 15, 2006, the contents of which are incorporated herein by reference.

### Field of the Invention

The invention relates to a method for identifying and eliminating an unknown virus program, and in particular, to a method for identifying an unknown virus program and a method for eliminating the same.

### Background of the Invention

A conventional antivirus program usually utilizes the characteristic code scanning techniques to identify a virus program. An antivirus program is typically consisted of two sections. The first section is a virus program code library including characteristic code strings of various virus programs which are selected specifically. The second section is a scanning program for scanning a program under check by use of the virus program code library and an eliminating program. The antivirus program judges whether the program under check is a virus program by determining whether the program under check includes any characteristic code string included in the virus program code library. The number of virus programs identifiable by the scanning program depends upon the number of the characteristic code strings of virus programs included in the virus program code library. Apparently, the larger the number of the characteristic code strings of virus programs included in the virus program code library is, the more the virus programs identifiable by the scanning program there are. The virus searching solutions using characteristic codes are in fact simple expressions of the experience of manual virus searching, and embody the general methods of manual virus identification based on the principle that "certain portion(s) of codes in identical virus programs or the same type of virus programs is(are) the same". In other words, if a virus program and its variants and transformation virus programs have same characteristics, the same characteristics may be described, and the virus program may be searched for by comparing the virus program and the description (i.e. the characteristic codes). However, not all virus programs can be described by characteristic codes. Many virus programs are hard to describe, even by use of the characteristic codes. In addition, the methods of characteristic code identification require a person in the art to analyze a virus program to obtain the characteristic codes of the virus program in advance. That is, only known virus programs are identifiable, while it is hard to effectively identify and eliminate an unknown virus program.

The Chinese patent application of invention No. 01117726.8 discloses a method for diagnosing a virus program by an infection experimentation of virus program behavior. In the method, a program under check is put into operation first, and then a sufficient number of normal programs which definitely do not carry any virus are put into operation. The checksums of the length of the normal programs are observed. If the length of a normal program is discovered to become larger or the checksum thereof is changed, it may be determined whether the program under check is a virus program or not. Of course, to guarantee the safety of a computer system, the CPU of the computer system is generally simulated by a program. The program can take a value, decode, and operate as a real CPU, and simulate the result of code segments running on the real CPU. However, this method for diagnosing a virus program by an infection experimentation of virus program behavior would occupy a very large portion of system storage with a low efficiency of virus identification, since it requires the simulation of a CPU or even the simulation of a whole operation system, and requires a large number of bait programs to be used to induce the program under check.

### Summary of the Invention

In view of this, a technical problem to be solved by the invention is to provide a method for identifying unknown virus programs, which method can identify not only known virus programs but also unknown virus programs, and a method for eliminating the same.

To solve the above technical problem, the invention provides a method for identifying an unknown virus program. The method may include:
obtaining behavior data of a program under check; and
judging whether the program under check is a virus program according to the obtained behavior data or set of behavior data of the program under check and preset behavior data or set of behavior data of virus programs.

The method may further include:
establishing an experience library to store the behavior data or set of behavior data of the virus programs, and store procedure expressions from behavior data to result data of the virus programs, wherein the procedure expressions comprise behavior data, result data and relationship data from a behavior to a result; and
comparing the obtained behavior data or set of behavior data of the program under check with the behavior data stored in the experience library, to obtain an operation result data resulted from the obtained behavior data or set of behavior data of the program under check.

The method may further include:
establishing a principle library to store result data of devastating operations of the virus programs; and
comparing the operation result data resulted from the obtained behavior data or set of behavior data of the program under check with the result data of devastating operations stored in the principle library, to judge whether the program under check is a virus program.

Alternatively, the method may further include only:
establishing an experience library to store procedure expressions from behavior data to result data of the virus programs, wherein the procedure expressions comprise behavior data or set of behavior data of the virus programs, result data, relationship data from behavior to result and a set of various permutations and combinations of the result data;
comparing the obtained behavior data or set of behavior data of the program under check with the behavior data or set of behavior data stored in the experience library, to obtain an operation result resulted from the obtained behavior data or set of behavior data of the program under check; and
comparing the operation result resulted from the obtained behavior data or set of behavior data of the program under check with the result data and the set of various permutations and combinations of the result data stored in the experience library, to judge whether the program under check is a virus program

The method may further include: performing characteristic code identification to the program under check, to judge whether the program under check is a virus program.

The method may further include: permuting the obtained behavior data or set of behavior data of the program under check in the order of the behavior data or set of behavior data stored in the experience library.

Alternatively, the behavior data of the program under check may be obtained by the following steps of:
obtaining devastating behavior data of known virus programs;
configuring a control processing program according to the devastating behavior data;
enabling the control processing program to gain control of the devastating behavior data;
when devastating behavior data of the program under check calls the control processing program, recording, by the control processing program, the behavior data of the program under check.

The method may further include: if the program under check is judged to be a virus program, storing the behavior data of the program under check in behavior information of the experience library, storing result data corresponding to the behavior data of the program under check in result information of the experience library, and establishing a mapping relationship between the behavior data and the result data of the program under check.

The method may further include: if the program under check is judged to be a virus program, storing the behavior data or set of behavior data of the program under check as behavior data or set of behavior data of the virus program.

The method may further include: storing devastating operation result data or a data set of permutations and combinations of the devastating operation result data of the virus program if the program under check is judged to be a virus program.

The method may further include: establishing a harmful behavior library to store the behavior data or set of behavior data of the virus programs.

The invention also provides a method for eliminating unknown virus programs, which may include:
obtaining behavior data of a program under check;
judging whether the program under check is a virus program according to the obtained behavior data or set of behavior data of the program under check and preset behavior data or set of behavior data of virus programs, and
eliminating the program under check if the program under check is judged to be a virus program.

The method for eliminating unknown virus programs may further include:
if the program under check is judged to be a virus program, establishing a reverse behavior operation step according to the obtained behavior data or set of behavior data of the program under check; and
executing the reverse behavior operation step.

The invention has the following advantages over the prior art:

In the invention, the typical behaviors of some typical virus programs and the behavior data of a program under check are obtained and compared, to judge whether the program under check is a virus program or not. With the method of the invention, not only known virus programs can be identified, but also most of unknown virus programs can be identified accurately.

In the invention, some information of virus programs are stored in an experience library or principle library, and a comparison or a logic analysis procedure is also utilized, that is, the behaviors of a program under check and the result of the behaviors are also taken into account. In this way, an unknown virus program may be identified accurately, and the accuracy and efficiency of unknown virus program identification may be improved. Furthermore, the experience library or principle library may be perfected automatically during the procedure of identifying the unknown virus program, thereby further improving the accuracy and efficiency of unknown virus program identification.

The method for eliminating an unknown virus program according to the invention is capable of eliminating the virus program. More than that, with the method, the reverse behavior operation(s) of a virus program may be created and executed according to the behavior(s) of the virus program, so that the data damaged by the virus program may be recovered. This solves the problem that a virus program is eliminated while the data damaged can not be recovered.

### Brief Description of the Drawings

The invention is further described below in details in conjunction with some embodiments with reference to the accompanying drawings, in which

Figure 1 is a flow chart illustrating a method for identifying unknown virus programs according to a first embodiment of the invention;

Figure 2 is a flow chart illustrating a method for identifying unknown virus programs according to a second embodiment of the invention;

Figure 3 is a flow chart illustrating the steps of obtaining behavior data of a program under check in a method for identifying unknown virus programs according to an embodiment of the invention;

Figure 4 is a flow chart illustrating a method for eliminating unknown virus programs according to an embodiment of the invention;

Figure 5 is a schematic diagram illustrating the structure of a system function call table;

Figure 6 is a schematic diagram illustrating the practical storage area of system function call programs;

Figure 7 is a schematic diagram illustrating the structure of the system function call table as shown in Figure 5 in which corresponding control processing programs are stored;

Figure 8 is a schematic diagram illustrating the practical storage area of system function call programs in the example as shown in Figure 7;

Figure 9 is a schematic diagram illustrating the structure of an independent operation behavior call table in which the control processing programs are stored; and

Figure 10 is a schematic diagram illustrating the structure of another independent operation behavior call table in which the control processing programs are stored.

### Detailed Description of the Embodiments

In the invention, the behavior data of a program under check is obtained and compared with the special behavior data of known virus programs, i.e. the behavior data associated with devastating operations, to judge whether the program under check is a virus program. With the method of the invention, known virus programs can be identified, and most of unknown virus programs can also be identified by behavior data comparison.

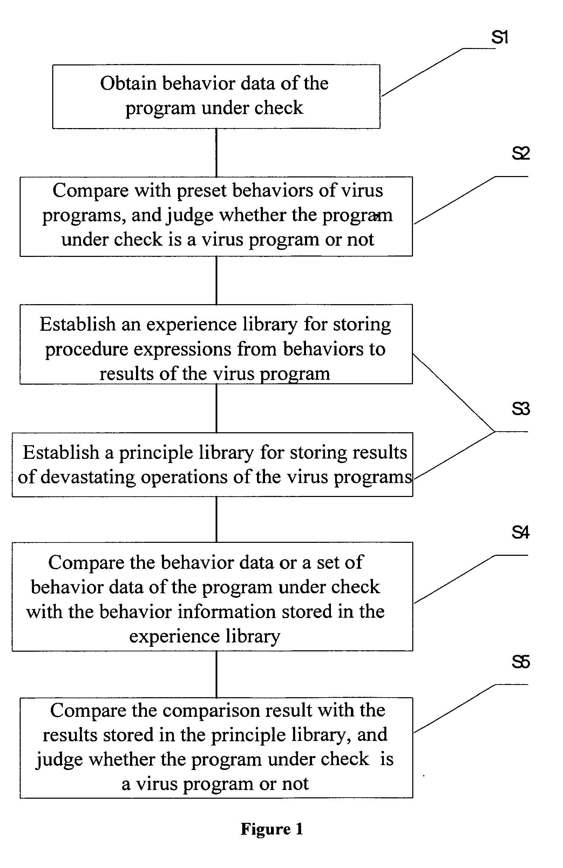

Figure 1 is a flow chart illustrating a method for identifying unknown virus programs according to a first embodiment of the invention. As shown in Figure 1, the method may include the steps as follows.

In step s1, the behavior data of a program under check is obtained. The behavior data of the program under check is substantially a series of source code sequence blocks capable of implementing a particular function or result, i.e. program operation instructions or/and program operation instructions and operation parameters or a set of specific program operation instructions or a set of program operation instructions and operation parameters with which the particular function or result can be achieved. The sequence blocks may be deduced by an antivirus technician manually or/and by means of assistant programs, usually by analyzing the program under check by using a general virus program analysis approach. In addition to the antivirus technician, the analyzing procedure requires tool programs, such as DEBUG and PROVIEW, as well as a dedicated computer(s) for experiments. If the program under check is a virus program, it may function to infect during the analyzing procedure or even outbreak to cause the data in floppy disks or hard disks entirely damaged. This makes it necessary to perform the analyzing procedure on a dedicated personal computer(s) for experiments, to avoid unwanted loss.

The steps of the general virus program analysis may be classified into two types, i.e. dynamic analysis and static analysis. The dynamic analysis is to dynamically track a virus program, when the virus program is loaded in memory, by use of program debugging tools such as DEBUG to observe the specific operations of the virus program, so as to find out the operation principle of the virus program. The dynamic analysis is not necessary when the coding of the virus program is relatively simple. However, when the virus program employs a variety of technical means, a method combining the dynamic analysis and the static analysis would be necessary through the analyzing procedure. For example, for an F_lip virus program using random encryption, the decryption can not be implemented unless a decryption program of the virus program is dynamically analyzed, so that a further static analysis may be executed. The static analysis is to disassemble the codes of the virus program by use of a disassembling program such as DEBUG to form a disassembled program list, to analyze which modules the virus program can be divided, which system call functional programs are used, what skills are employed, how to convert the procedure of infecting a file by the virus program into a procedure of eliminating the virus program and recovering the file, which codes may be used as characteristic codes and how to prevent this type of virus program from being damaged, and so on.

In the prior art, the characteristic codes of the virus program may be obtained based on the above analysis and stored in a virus program characteristic code library, which may be used to identify the virus program later. However, with the identification method using the characteristic codes, only known virus programs can be identified. While in the method according to the embodiment, in order to identify unknown virus programs, the behavior data, i.e. a series of source code sequence blocks capable of implementing a particular function or result, of the program under check is obtained by analysis. In this way, it may be judged whether the program under check is a virus program or not according to the source code sequence blocks. Of course, the step(s) of obtaining the behavior data of the program under check may also be performed automatically by a computer, the related embodiment is described in a latter portion of the description.

In step S2, it is judged whether the program under check is a virus program according to the obtained behavior data or a set of obtained behavior data of the program under check and the preset behavior data or a set of preset behavior data of virus programs.

The preset behavior data or a set of preset behavior data of virus programs may be stored in a database for further storage and invoke. The behavior data of the virus programs may be obtained from the above described manual analysis or computer analysis. Alternatively, an existing result of behavior analysis of the virus programs may be used directly. The behavior data of the virus programs is also source code sequence blocks meeting the requirements of certain conditions.

The obtained behavior data or the set of obtained behavior data of the program under check are compared with the preset behavior data or the set of preset behavior data of the virus programs, to judge whether the program under check is a virus program. Of course, other analysis approaches known by those skilled in the art may be used to judge whether the program under check is a virus program. The principles of the judgment may be obtained from the experience of those skilled in the art, and thus may be different from each other. Of course, all of these different principles may be used to derive a judgment result whether the program under check is a virus program or not, but with different accuracies of judgment. Since different analysis approaches may use different judgment principles, the description does not impact any limit on the analysis approaches and the judgment principles to be used. Any method or approach employing the behavior data comparison according to the invention should be encompassed within the inventive concept of the invention. In the following description, a judgment principle is used as an example.

The known virus programs may be analyzed by the manual or computer analysis described in step s1, to obtain the behavior data or a set of behavior data (referred to as "behavior data" hereinafter) of the known virus programs. The behavior data may be stored in a database, which is referred to as "harmful behavior database" in the description. The harmful behavior database saves a series of behavior operation data of a variety of virus programs. The behavior operation data of the virus programs may be selected by those skilled in the art according to a certain rule(s). For example, the behavior operation data of the operations often executed by the virus programs when engaged in damaging may be selected. For example, a write operation to disc by use of interrupt 13H is a common behavior of some virus programs, which is a somewhat special behavior. By selecting the behavior operation data of the virus programs, the amount of data, which is to be used to judge an unknown program, stored in the harmful behavior database may be reduced, so that the comparison with the behavior data of virus programs may be implemented in an enhanced rate. Of course, a computer may be used to automatically analyze the known virus programs, and record all the behavior data of the known virus programs, or make selections among the behavior data of the known virus programs according to a predefined rule(s) and record the selected behavior data.

Therefore, it may be judged whether the program under check is a virus program by comparing the behavior data of the program under check with the behavior data stored in the harmful behavior database.

In Case A when the behavior data of the program under check is the same with or similar to the behavior data stored in the harmful behavior database, it may be determined that the program under check is a known virus program or a variant of the known virus program. The sameness or similarity may be defined with one or more parameters. When the match or involvement degree between the behavior data of the program under check and the typical behavior data reaches or exceeds the parameters, the behavior data of the program under check may be regarded as same with or similar to the typical behavior data.

Particularly in an embodiment, the behavior data of a program under check includes Behavior 1, Behavior 2, Behavior 3, Behavior 4, Behavior 5, Behavior 6, Behavior 7, and Behavior 8.

The behavior data of a virus program stored in the harmful behavior database includes Behavior 2, Behavior 3, Behavior 4, Behavior 5, and Behavior 6.

As can be seen from the comparison between the above behavior data, the behavior data of the program under check includes all the behaviors of the virus program. Accordingly, it may be directly determined that the program under check is a variant of the virus program.

**In Case B** when none of the behavior data of the program under check conforms to the behavior data of any virus program, it may be determined that the program under check is a legal program.

Particularly in an embodiment, the behavior data of a program under check includes Behavior -1, Behavior -2, and Behavior -3.

The harmful behavior data stored in the harmful behavior database includes Behavior 1, Behavior 2, Behavior 3, Behavior 4, Behavior 5, Behavior 6, ..., and Behavior n (n is a natural number).

As can be seen from the comparison between the above behavior data, the behavior data of the program under check does not include any of the behaviors stored in the harmful behavior database. Accordingly, it may be determined that the program under check is a legal program.

In Case C which is neither Case A nor Case B after the behavior data of the program under check is compared with the behavior data of virus programs stored in the harmful behavior database, a further identification is required. Of course, the steps of the further identification are to improve the accuracy of virus program identification. The judgment may have only two branches, i.e. "YES" or "NO".

Particularly in an embodiment, the behavior data of a program under check includes behavior 1, behavior 2, behavior 3, and behavior 4.

The harmful behavior data of a virus program stored in the harmful behavior database includes behavior 2, behavior 3, behavior 4, behavior 5, and behavior 6.

As can be seen from the comparison between the above behavior data, the behavior data of the program under check includes only a portion of the behaviors of the virus program. Accordingly, the nature of the program under check can not be judged directly. A further judgment is required. Of course, it may be concluded directly that the program under check is the virus program or is not the virus program. But such a conclusion is not accurate. The further judgment is to improve the accuracy of virus program identification. The following steps show a further judgment procedure for identifying the program under check.

In step s3, an experience library is established to store the behavior data or a set of behavior data of virus programs, as well as procedure expressions for obtaining result data from behavior data. A procedure expression includes behavior data, result data, and relationship data between the behavior data and the result data. A principle library may also be established to store result data of devastating operations of virus programs.

The experience library is adapted to store a set of "behavior logic inferential expressions" or "discrete mathematic expressions" of "a result due to one behavior" or "a result due to multiple behaviors executed in order" of the virus programs. Each expression, regardless of the type of the expression, illustrates a procedure from behavior(s) to a result of a virus program. Each expression is a storage element in the experience library. All the expressions included in the experience library constitute an integrated set.

Particularly in an embodiment, a behavior logic inferential expression is:
(Behavior A) AND (Behavior B) leads to (Result AB)

which is described below with an example as follows:

A virus program includes the behaviors of "automatically searching for the file location of file "a.exe", adding the file location of the file "a.exe" into a corresponding startup item in the registration table, and causing the operation system to run the file "a.exe" automatically after startup".

(Behavior A) is equivalent to "automatically searching for the file location of file "a.exe"".

(Behavior B) is equivalent to "adding the file location of the file "a.exe" into a corresponding startup item in the registration table".

(Result AB) is equivalent to "the operation system running the file "a.exe" automatically after startup".

The principle library stores the results of devastating operations of the virus programs. Generally, the results of devastating operations may include the malignant results after the computer operation systems are damaged by the virus programs, such as abnormal write and read operations, the deletion of some system file(s), memory conflict, and the damaging of disc partition table. A result of devastating operation(s) is a storage element in the principle library. Of course, the result of devastating operation(s) may include a result of operation(s) damaging the system, since some operation of a virus program may be non-devastating when operated independently, and may be operated by some legal programs. Each behavior included in the experience library may correspond to a result, and the combination of some behaviors may also correspond to a result.

In step s4, the obtained behavior data of the program under check is permuted in order, for example, in an order of <(Behavior A) AND (Behavior B)...AND(Behavior N)>, and is compared with the behavior data included in the experience library. The order described above may be the order of the behavior data of a virus program arranged in the virus program, or may be the order of the behavior data of the virus program arranged in the experience library. The behavior data in the experience library is the information in before the field "leads to" in the behavior logic inferential expression. A behavior sequence may be obtained by permuting the behavior data of the program under check in the order of the behavior data included in the experience library. The behaviors in the behavior sequence are compared with the behavior data stored in the experience library in order. If any behavior matches with a behavior stored in the experience library, step s5 is executed. If none of the behaviors stored in the experience library matches with any of the behaviors in the behavior sequence, it may be determined that the program under check is a legal program. The purpose of permuting the behavior data of the program under check in order is to improve the efficiency and accuracy of the comparison. Of course, the behavior data may be directly compared without permuting the behavior data of the program under check in order.

In step s5, it is judged whether the program under check is a virus program according to the result data corresponding to the matched behavior data in the experience library and the results of devastating operations in the principle library, that is, by comparing the operation result data resulted from the behavior data or the set of behavior data with the result data of devastating operations in the principle library.

Here, the "matched" is a result from the comparison in step S4. The result data corresponding to the matched behavior data in the experience library is the data following the field "leads to" in the behavior logic inferential expression. The principles of the judgment may be obtained from the experience of those skilled in the art, and thus may be different from each other. Of course, all of these different principles may be used to derive a judgment result whether the program under check is a virus program or not, but with different accuracies of judgment.

In the analysis approach of the embodiment, the result data corresponding to the matched behavior data in the experience library is compared with the results of devastating operations in the principle library. If the comparison shows that any of the storage elements in the principle library is matched, it may be determined that the program under check is an unknown virus program; otherwise, it may be determined that the program under check is a legal program.

Of course, the steps s4 and s5 may also involve a procedure of comparison, logical analysis or logical judgment, the addition of which may improve the accuracy and efficiency of unknown virus program identification in the embodiment. These analysis approaches are known to those skilled in the art, and thus are not described herein.

The steps s4 and s5 as shown in Figure 1 are described below with reference to an example.

In the example, it is supposed that a virus program has the behaviors of: "automatically searching for the file location of file "a.exe", adding the file location of the file "a.exe" into a corresponding startup item in the registration table, and causing the operation system to run the file "a.exe" automatically after startup".

Accordingly, the behavior of "automatically searching for the file location of file "a.exe"" (Behavior A) leads to "obtaining the file location of the file "a.exe"" (Result A). the behavior of "adding the file location of the file "a.exe" into a corresponding startup item in the registration table" (Behavior B) leads to "the operation system running the file "a.exe" automatically after startup" (Result B).

It is supposed that the following "behavior logic inferential expression 1" and "behavior logic inferential expression 2" both are storage elements in the experience library and that (Result B) is a storage element in the principle library:
**behavior logic inferential expression 1:** (Behavior A) leads to (Result A);
**behavior logic inferential expression 2:** (Behavior B) leads to (Result B),

As in step s4, the procedure of comparing the behavior data of the virus program with the storage elements in the experience library may be follows:
<(Behavior A)> is equivalent to or matches with <the behavior information in the behavior logic inferential expression 1, i.e. the information before the field "leads to" in the behavior logic inferential expression 1>,
<(Behavior B)> is equivalent to or matches with <the behavior information in the behavior logic inferential expression 2, i.e. the information before the field "leads to" in the behavior logic inferential expression 2>.

As in step s5, the result data corresponding to the matched behavior information in the experience library, i.e. the data following the field "leads to" in the behavior logic inferential expressions, is compared with the storage elements in the principle library in the following procedure:
<(Result A) is not equivalent to or does not match with any of the storage elements in the principle library>;
<(Result B) is equivalent to or matches with one of the storage elements in the principle library>;

Analysis procedure 2:
(Result A) is not a storage element in the principle library;
(Result B) is a storage element in the principle library;
(Result A) is the premise of (Result B). The premise may be determined according to the logical relationship between the operations such as data write and read operations, acquisition, and invoke by a computer;
Result of the judgment: the program under check is a virus program.

The above determination rules not only require that (Result B) is a storage element in the principle library, but also require that (Result A) contributes to (Result B). Only when the two conditions are met that the program under check may be determined as a virus program.

Of course, the above determination rules may require only that any of (Result A) or (Result B) is one of the storage elements in the principle library, with which the program under check may be determined as a virus program. The different determination rules employed may result in different results with different accuracies. However, as long as a procedure of comparing between behavior(s) and result(s) is employed, the approach should be encompassed within the inventive concept of the invention.

In addition, an experience library for storing procedure expressions between behaviors and results of the virus programs may also be established. Here the procedure expressions include the behavior data or sets of behavior data of virus programs, the result data, the relationship data between the behaviors to the results and sets of various permutations and combinations of the result data. In this way, the obtained behavior data or the set of behavior data of the program under check may be compared with the behavior data or sets of behavior data in the experience library, to obtain the result data of operations resulted from the behavior data or the set of behavior data. The result data of operations is further compared with the result data and the set of various permutations and combinations of the result data in the experience library. Accordingly, it may be judged whether the program under check is a virus program or not.

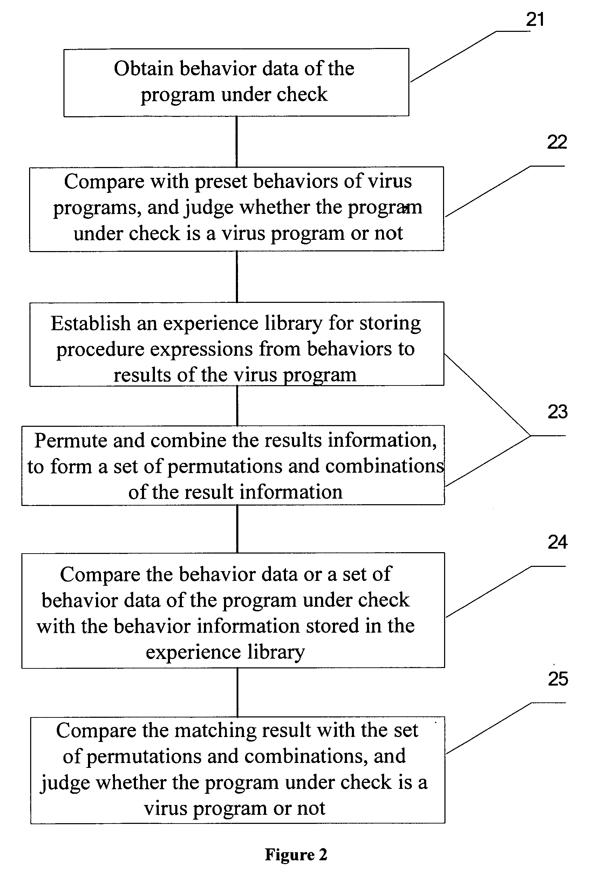

Figure 2 is a flow chart illustrating a method for identifying unknown virus programs according to a second embodiment of the invention. As shown in Figure 2, the method may include the steps as follows:

In step 21, the behavior data of a program under check is obtained. The behavior data of the program under check is substantially a series of source code sequence blocks capable of implementing a particular function or result. The sequence blocks may be deduced in advance by analysis. Of course, the steps of obtaining the behavior data of the program under check may also be performed automatically by a computer, the related embodiment is described in a latter portion of the description.

In step 22, it is judged whether the program under check is a virus program according to the obtained behavior data of the program under check and the preset behavior data of virus programs. The preset behavior data of virus programs may be stored in a database for further storage and invoke. The behavior data of the virus programs may be obtained by analysis. Alternatively, an existing result of behavior analysis of the virus programs may be used directly. The behavior data of the virus programs is also source code sequence blocks meeting the requirements of certain conditions.

Most of the steps as shown in Figure 2 are similar to the corresponding steps in Figure 1, and thus are not repeated herein. The method as shown in Figure 2 is different from that in Figure 1 in that the steps 23, 24 and 25 for improving the accuracy of unknown virus programs are different from the corresponding steps in Figure 1. The steps 23, 24 and 25 are described below, reference may be made to the above description of Figure 1 for some details omitted herein.

In step 23, an experience library is established to store procedure expressions from behaviors to results of virus programs. A procedure expression includes behavior data, result data, and relationship data between behaviors and results. The result data is permutated and combined, thereby forming a set of permutations and combinations of the result data.

In step 24, the obtained behavior data of the program under check is permuted in order, for example, in an order of <(Behavior A) AND (Behavior B)...AND(Behavior N)>, and is compared with the behavior data stored in the experience library. The behavior data in the experience library is the information in before the field "leads to" in the behavior logic inferential expression. A behavior sequence may be obtained by permuting the behavior data of the program under check in order. The behaviors in the behavior sequence are compared with the behavior data stored in the experience library in order. If any behavior matches with a behavior stored in the experience library, step 25 is executed. If none of the behaviors stored in the experience library matches with any of the behaviors in the behavior sequence, it may be determined that the program under check is a legal program.

In step 25, the result data corresponding to the matched behavior data in the experience library is permuted in order, and is compared with the set of permutations and combinations of result data in the experience library, to judge whether the program under check is a virus program.

The result data may be permuted in the order of generating the results, for example, in the order of <(Result A) AND (Result B)...AND (Result N)>. The result data corresponding to the matched behavior data in the experience library is the data following the field "leads to" in the behavior logic inferential expression. The principles of the judgment may be obtained from the experience of those skilled in the art, and thus may be different from each other. Of course, all of these different principles may be used to derive a judgment result whether the program under check is a virus program or not, but with different accuracies of judgment. The set of permutations and combinations of the result data in the experience library may include the permutations and combinations of all of the result data, or may include the permutations and combinations of a selected portion of the result data, thereby significantly reducing the number of the permutations and combinations in the set and improving the match efficiency.

Permuting the obtained behavior data of the program under check in order and permuting the result data corresponding to the matched behavior data in the experience library in order are to improve the efficiency and accuracy of comparison. Of course, the comparison may be performed without the permuting operations.

In the embodiment, the result data corresponding to the matched behavior data in the experience library may be permuted in a certain order, and compared with the set of permutations and combinations of the result data in the experience library. If the comparison shows that any subset of the set of permutations and combinations of the result data in the experience library is matched, it may be determined that the program under check is an unknown virus program; otherwise, it may be determined that the program under check is a legal program.

Of course, the steps 24 and 25 may also involve a procedure of comparison, logical analysis or logical judgment, the addition of which may improve the accuracy and efficiency of unknown virus program identification in the embodiment. These analysis approaches are known to those skilled in the art, and thus are not described herein.

The steps 24 and 25 are described below with reference to an example.

In the example, it is supposed that a virus program has the behaviors of: "automatically searching for the file location of file "a.exe", adding the file location of the file "a.exe" into a corresponding startup item in the registration table, and causing the operation system to run the file "a.exe" automatically after startup".

Accordingly, the behavior of "automatically searching for the file location of file "a.exe"" (Behavior A) leads to "obtaining the file location of the file "a.exe"" (Result A). the behavior of "adding the file location of the file "a.exe" into a corresponding startup item in the registration table" (Behavior B) leads to "the operation system running the file "a.exe" automatically after startup" (Result B).

It is supposed that the following "behavior logic inferential expression 1" and "behavior logic inferential expression 2" both are storage elements in the experience library and that the permutation and combination "(Result A) AND (Result B)" is a subset in the set of permutations and combinations of the result data in the experience library: "AND" in the "(Result A) AND (Result B)" means a logical AND.
**behavior logic inferential expression 1:** (Behavior A) leads to (Result A);
**behavior logic inferential expression 2:** (Behavior B) leads to (Result B),

In the procedure of comparing the behaviors with the storage elements in the experience library in step 24, <(Behavior A)> is equivalent to or matches with <the behavior data in the behavior logic inferential expression 1, i.e. the information before the field "leads to" in the behavior logic inferential expression 1>.

<(Behavior B)> is equivalent to or matches with <the behavior data in the behavior logic inferential expression 2, i.e. the information before the field "leads to" in the behavior logic inferential expression 2>.

In step 25, the result data corresponding to the matched behavior data in the experience library is the data following the field "leads to" in the behavior logic inferential expressions. A combination of the result data results in "(Result A) AND (Result B)". "AND" in the "(Result A) AND (Result B)" means a logical AND.

The result of the above analysis and processing is as follows: the permutation and combination "(Result A) AND (Result B)" is a subset in the set of permutations and combinations of the result data in the experience library.

The result of further judgment: the program under check is a virus program.

The two embodiments as shown in Figure 1 and Figure 2 include approaches for improving the accuracy and efficiency of unknown virus program identification. Of course, other approaches known by those skilled in the art may be utilized, which will not be described herein for clarity. Of course, some beneficial parts of the two embodiments as shown in Figure 1 and Figure 2 may be utilized together. The core steps are the steps s1 and s2 as shown in Figure 1 and the steps 21 and 22 as shown in Figure 2.

The method for identifying unknown virus programs in the embodiments may further include: identifying the characteristic codes of the program under check to judge whether the program under check is a virus program. Since it can not be known in advance whether the program under check is a known virus program, or a legal program, or an unknown virus program, a step of characteristic code identification may be included, to reduce the computing amount of the steps of identifying unknown virus programs in the embodiments. If a characteristic code comparison shows that the characteristic codes of the program under check match with those of a known virus program, the program under check is the known virus program. In this way, the further judgment may be avoided when the program under check is a known virus program, thereby improving the efficiency of detection. In general, the characteristic code of a virus program is a code string including several contiguous bytes, and may also include one or more "ambiguous" bytes. When comparing with the characteristic code of such a virus program, it may be determined that the program under check is the virus program if all the bytes, except the "ambiguous" bytes, are matched.

If the program under check is determined to be a virus program, the behavior data of the program under check is stored in the behavior information of the experience library, the result data corresponding to the behavior data of the program under check is stored in the result information of the experience library, and a mapping relationship is established between the behavior data and the result data. In this way, the data in the experience library may be perfected and added in real time. The storage elements in the principle are generally not increased or perfected, since the results of devastating operations to the computer system are substantially steady.

If the program under check is determined to be a virus program, the behavior data of the program under check is stored as the behavior data of one type of virus program, to perfect the preset behavior data of the typical virus programs.

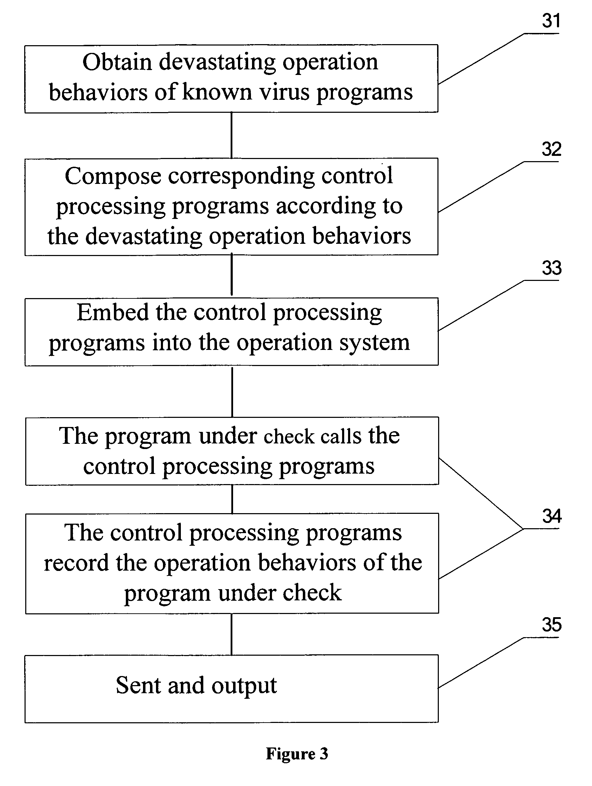

Of course, the steps of obtaining the behavior data of the program under check may be performed automatically by a computer. Figure 3 illustrates an embodiment in which a computer automatically obtains the behavior data of a program under check.

In step 31, the devastating operation behaviors of known virus programs are obtained and decomposed. Years of observation and study on the virus programs discover that some behaviors are common behaviors of the virus programs and are somewhat special. The devastating operation behaviors of known virus programs may be obtained and decomposed manually or by a computer. Generally, the devastating operations may include the operations that may result in malignant results or abnormal operations to the computer operation systems, such as abnormal write and read operations, the deletion of some system file(s), memory conflict, and the disruption of disc partition table. Some specific behaviors that may be used to monitor the virus programs are listed are listed as follows: occupation of INT 13H, modification of memory amount of the data area of DOS system, write actions to COM and EXE files, and switching characteristics by virus programs with hosting programs. In addition to the above described apparently devastating operation behaviors, generally the virus programs may further exhibit some normal operation behaviors, which may generate dangerous operations damaging the data when operated separately or combined together, and thus are within the scope of devastating operation behaviors of the virus programs according to the invention.

Generally, the devastating behaviors of a virus program may be generated by instructions or sets of instructions that perform a series of devastating operations, and operation parameters. Each of the instructions or each set of instructions generates a separated devastating operation behavior. In view of this, decomposing the devastating operation behaviors of a known virus program is to extract the instructions or sets of instructions, associated with the separated devastating operation behaviors, included in the known virus program. For example, supposing that the function calls 03H and 05H of the Interrupt 13H involve dangerous operations possibly damaging the data, the instruction corresponding to the function calls 03H and 05H of the Interrupt 13H may be considered as an instruction for generating a separated devastating operation behavior. For another example, supposing that the function call 02H of Interrupt 10H and the function call 06H of Interrupt 11 H, when combined together, may involve dangerous operations possibly damaging the data, the set of instructions corresponding to the function call 02H of Interrupt 10H and the function call 06H of Interrupt 11 H may be considered as a set of instructions for generating a separated devastating operation behavior. If a program under check includes such instruction codes, it may be determined that the program under check has a questionable operation behavior possibly damaging other programs or data. These behaviors may be collected, and it may be judged whether the program under check is a virus program and how to recover the data damaged by the virus program to the maximum extent according to the set of behaviors of the program under check.

The devastating operation behaviors of known virus programs may also be obtained by the assistance of a computer. For example, the Chinese patent application No. 01117726.8 entitled "Method, System and Media for Detecting and Eliminating Known and Unknown Computer Viruses" discloses a method for detecting viruses by inducing the viruses to infect an object, by which the devastating operation behaviors of the known and unknown virus programs may be obtained. This Chinese patent application No. 01117726.8, having been published, is not described herein.

In step 32, control processing programs corresponding to these devastating operation behaviors are configured or composed according to these devastating operation behaviors.

After the devastating operation behaviors of the known virus programs are decomposed, the control processing programs corresponding to these devastating operation behaviors may be composed according to these behaviors. A control processing program is adapted to respond to the instruction(s) and parameter(s) corresponding to a devastating operation behavior of a program under check, feeds back information about that the devastating operation behavior is successful to induce the next behavior, and record the devastating operation behavior of the program under check.

Supposing the instructions and parameters involved in a devastating operation behavior of a program include DEL(Parameter 1; Parameter 2; Parameter 3), in which "DEL" represents deletion, Parameter 1 indicates the disc number to be deleted, Parameter 2 indicates the cluster number to be deleted, and Parameter 3 represents a variable indicating whether the deletion is successful. The control processing program corresponding to this devastating operation behavior may be as follows:
(1) WRITE(FILE1, "DEL(Parameter 1; Parameter 2; Parameter 3)");
(2) WRITE(DEL(Parameter 1; Parameter 2; Parameter 3), 0, 0, 0);

The instruction of line (1) indicates to record the devastating instruction "DEL(Parameter 1; Parameter 2; Parameter 3)" as a character string into the file FILE1. The instruction of line (2) indicates to feed a flag "0" representing operation success back to the devastating instruction "DEL(Parameter 1; Parameter 2; Parameter 3)".

In step 33, the control processing programs are embedded into the operation system, so that the control processing programs have the control of the devastating operation behaviors. This control may be obtained by enabling the control processing programs to gain a system control of a higher priority than the operation system.

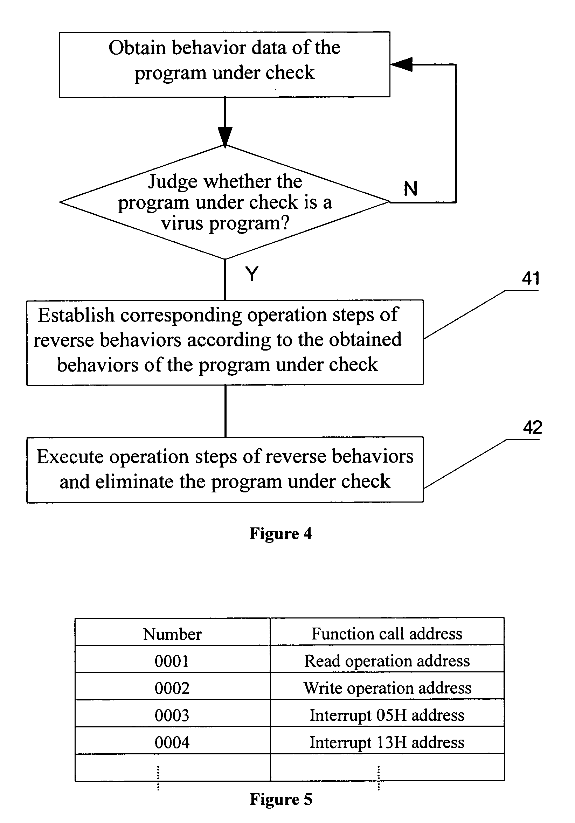

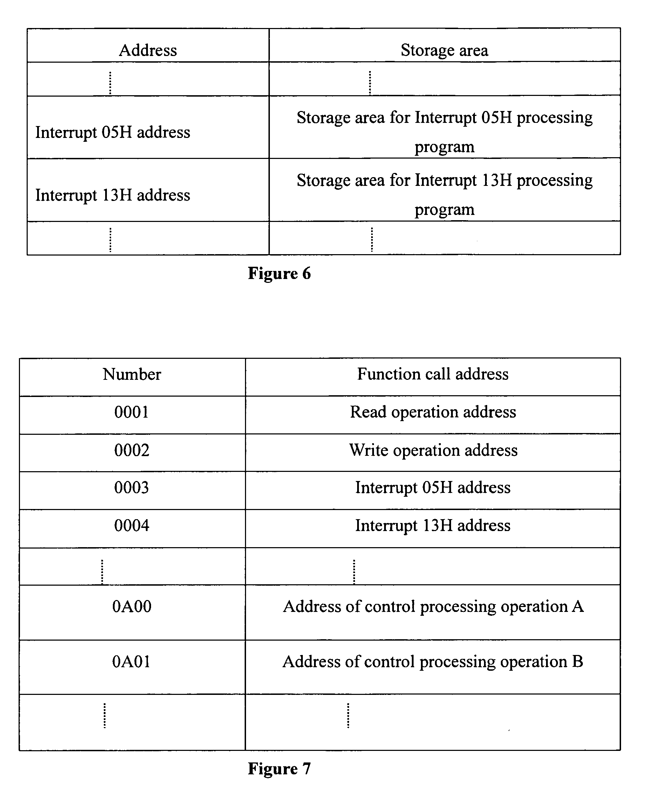

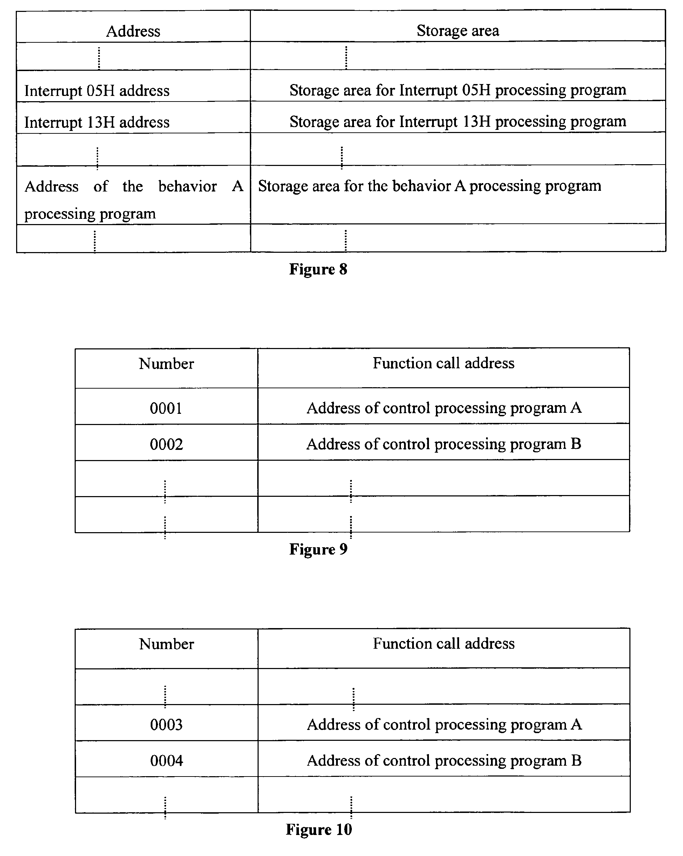

To enable a fast and automatic detection and record of the possible devastating operation behaviors to recognize whether the program under check is a virus program, it is necessary for the control processing programs to gain the control of the devastating operation behaviors of the program under check, so as to obtain the devastating operation behaviors of the program under check. To this end, the control processing programs are embedded into the operation system so that the control processing programs may gain the control of corresponding devastating operation behaviors. Of course, other approaches may also be employed to enable the control processing programs to gain the control to detect and record the devastating operation behaviors of the program under check. If the control processing programs are to be embedded into the operation system, the control processing programs may be embedded into the function call table of the operation system. Alternatively, the control processing programs may be stored into a separated operation behavior call table which is enabled to have a higher priority than the function call table of the operation system. For example, any operation system has a system function call table which may have different structures as required. Referring to Figure 6, the system function call table as shown in Figure 5 includes two fields, i.e. a number field for storing the numbers of system function call programs, and a function call address field for storing the pointers, i.e. addresses, of the system function call programs. The addresses generally correspond to the first addresses of the system function call programs. Figure 6 is a schematic diagram illustrating the practical storage area of system function call programs. When a function provided by a certain operation system is required, for example, if the write disc operation provided by Interrupt 13H processing program is required, the address of Interrupt 13H processing program is extracted from the system function call table as shown in Figure 5, the corresponding processing program is read from the corresponding address in the storage area as shown in Figure 6 to the memory, so that the processing program may be executed to obtain an operation result. If the control processing programs are to be embedded into the operation system, one approach is to store the corresponding control processing programs into the system function call table. Supposing 100H(H represents hexadecimal) devastating operation behaviors are obtained by decomposition, and 100H corresponding control processing programs are composed, the storage addresses of the 100H control processing programs are stored in the table as shown in Figure 5, the result of the storage is as shown in Figure 7. Figure 8 is a schematic diagram illustrating the practical storage area of system function call programs in the example as shown in Figure 7. The storage addresses of the control processing programs are stored behind the addresses of the system function call programs in turn.

In practical implementation, the approaches for embedding control processing programs into an operation system are not limited to that as shown in Figure 7. The approach as shown in Figure 9 may also be employed, in which the control processing programs are stored as a separated operation behavior call table, and the control processing programs are enabled to have a higher priority than the system function call programs. The step of enabling the control processing programs to have a higher priority approach is implemented by modifying the system function call pointer as shown in Figure 5, i.e. the addresses of the system function call programs in the field "system function call address", to be the addresses of corresponding control processing programs. Referring to the example as shown in Figure 7, supposing that the address of control processing operation A with a number "0A00" corresponds to the Interrupt 05H with a number "0003", then the address of Interrupt 05H stored in the field "function call address" needs to be modified to be "the address of control processing operation A". Accordingly, when the instruction associated with the devastating operation behavior calls the program corresponding to the address of Interrupt 05H, what is actually called is "the address of control processing program A". Therefore, the control processing program A gains a system control with a higher priority than the Interrupt 05H. In this way, the control processing programs are embedded into the operation system.

In an alternative embodiment, a system function call program corresponding to a devastating operation behavior may be enabled to hand over its control to a corresponding control processing program, so that the control processing program may gain the control of the devastating operation behavior. Referring to the storage approach as shown in Figure 10, all the control processing programs constitute another system function call table in the system. If this table has a higher priority than the original system function call table, the control processing programs may gain the control of the devastating operation behaviors. For example, when a program under check calls a system function call program, a corresponding control processing program in the table as shown in Figure 10 is called first. If the corresponding control processing program is not present in the table of Figure 10, the real system function call program as shown in the table of Figure 2 is then called.

The control processing programs have gained the control of the devastating operation behaviors in step 33. Therefore in step 34 when the program under check calls the control processing programs, the control processing programs may respond to the program under check and record the operation behaviors of the program under check. In other words, once the program under check is put into operation and an instruction for implementing a devastating operation behavior therein is executed, i.e. if the program under check calls a corresponding system function call program, a corresponding control processing program is invoked first instead of the system function call program. The control processing program responds to the program under check and records the devastating operation behaviors thereof.

Generally a virus program requires the result of a devastating operation behavior, and will not execute the next operation until the result indicating success of the devastating operation behavior is obtained. Therefore, the control processing program may return information of success responding to the invoke of the program under check to induce the program under check to exhibit the next behavior, so as to further judge the program under check. In fact, the control of the operation system has been taken over by the control processing program in step 33, so the program under check does not obtain the real result of operations. The information received by the program under check is returned by the control processing program, and is in fact false information with respect to its requirements. In fact, the program under check is not operating in a virtual environment under control of the control processing program, instead of the environment of the operation system. In this way, the operation behaviors of the program under check may be detected and recorded without any damage to the system. The above described method of obtaining the executable operation behaviors of a virus program may be understood as creating a virtual environment by software in the practical operation system. The data and operation result in this virtual environment are entirely isolated from the real operation system, but the execution procedures of files and processes and the results therefrom are entirely identical with those in the real operation system.

In practical implementation, the step 33 is an optional step. No matter whether a control processing program is embedded in an operation system or not, the control processing program may create a virtual operational environment for inducing the behaviors of a program under check so as to detect the operation behaviors of the program under check, as long as the control processing program has the control of a higher priority than the operation system when the instructions associated with the operation behaviors of the program under check are executed.

In step 35, after the operation of the program under check terminates, the recorded operation behaviors of the program under check are sent and output together.

Figure 4 is a flow chart illustrating a method for eliminating unknown virus programs according to an embodiment of the invention. The method for eliminating unknown virus programs may utilize either one of the flows as shown in Figure 1 or 2. Based on the method for detecting unknown virus programs as shown in Figure 1 or 2, the method for eliminating unknown virus programs as shown in Figure 4 may further include: eliminating the program under check if the program under check is determined to be a virus program.

Based on the elimination of the virus program, the method for eliminating unknown virus programs as shown in Figure 4 may further include a method for recovering data damaged by the virus program, which may include the steps as follows.

In step 41, if the program under check is determined to be a virus program, the corresponding reverse behavior operation steps are established according to the behavior data of the program under check.

Since the executable behavior operation steps of the virus program have been obtained, the reverse behavior operation steps corresponding to the behavior operation steps may be established. For example, the reverse behavior operation steps 1, 2, ..., N corresponding to the behavior operation steps 1, 2, ..., N may be established. Supposing the behavior operation step 1 is executed to transfer stored data, the corresponding reverse behavior operation step 1 is adapted to execute the corresponding reverse behavior operation, i.e. the recovery of the data. Supposing the behavior operation step 2 is executed to delete data, the corresponding reverse behavior operation step 2 is adapted to execute the corresponding reverse behavior operation, i.e. the recovery of the deleted data (for example, the deleted data may be recovered by redundancy verification). To establish the corresponding reverse behavior operation steps is to generate a set of program source code instructions. The set of program source code instructions correspond to operation steps which are reverse to the behavior operation steps.

In step 42, the reverse behavior operation steps are executed.

Since the reverse behavior operation steps is a set of program source code instructions, the execution of the reverse behavior operation steps is a procedure of invoke the program source code instructions in turn. A corresponding operation is executed according to each of the program source code instructions, so as to recover the data damaged by the virus program. For example, a primary function may be established to execute the reverse behavior operation steps. In the primary function, the program source code instructions are invoked in turn.

The reverse behavior operation steps, i.e. the set of program source code instructions, may be stored in a database or may be stored in a large data storage table. For example, if the reverse behavior operation steps are stored in a database, a certain reverse behavior operation step of the virus program is a certain storage element (subset) in the database. The database may store the certain storage element, i.e. the certain reverse behavior operation step, in the data structure described as follows:
(Name of virus program), (Reverse behavior operation step 1, Reverse behavior operation step 2, ..., Reverse behavior operation step N), (Addition of information field, Deletion of virus program);

The numbers 1, 2, ..., N represent the order of the steps of eliminating the virus program. The reverse behavior operation steps include source code sequence blocks for executing the reverse operations corresponding to the behavior operation steps of the virus program. The information of the reverse behavior operation steps may also include related operation parameters. The above mentioned data structure may be of other forms, for example, as follows:
(Name of virus program), (Reverse behavior operation step 1, Reverse behavior operation step 2, ..., Reverse behavior operation step N, Addition of information field), Deletion of virus program);

In fact, the storage approaches and the data structures for storage are only examples for illustrating the technical ideas of the invention. Other suitable storage approaches and data structures for storage which can implement the storage and invoke of the reverse behavior operation steps may be used.

The reverse behavior operation steps corresponding to the behavior operation steps may be implemented via a corresponding list: a data list may be preset to list various behavior operation steps and their corresponding reverse behavior operation steps; when the virus program executes a certain behavior operation step, a corresponding reverse behavior operation step may be extracted from the preset data list, for example, addition and deletion; in this way, all of the behavior operation steps of the virus program are converted into their corresponding reverse behavior operation steps in turn.

A method for identifying and eliminating unknown virus programs according to the invention is described above in detail. In the description, the principle and some embodiments of the invention are described using specific examples. The description of the embodiments is to facilitate the understanding of the method of the invention and the core ideas thereof. In addition, a person skilled in the art will recognize various variations for the embodiments and applications according to the teaching of the invention. The description should not be construed as limit to the invention.

## Claims

1. A method for identifying an unknown virus program, **characterized by** comprising:
obtaining behavior data of a program under check; and
judging whether the program under check is a virus program according to the obtained behavior data or set of behavior data of the program under check and preset behavior data or set of behavior data of virus programs.

2. The method for identifying an unknown virus program according to claim 1, **characterized by** further comprising:
establishing an experience library to store the behavior data or set of behavior data of the virus programs, and store procedure expressions from behavior data to result data of the virus programs, wherein the procedure expressions comprise behavior data, result data and relationship data from behavior to result; and
comparing the obtained behavior data or set of behavior data of the program under check with the behavior data stored in the experience library, to obtain an operation result data resulted from the obtained behavior data or set of behavior data of the program under check.

3. The method for identifying an unknown virus program according to claim 2, **characterized by** further comprising:
establishing a principle library to store result data of devastating operations of the virus programs; and
comparing the operation result data resulted from the obtained behavior data or set of behavior data of the program under check with the result data of devastating operations stored in the principle library, to judge whether the program under check is a virus program.

4. The method for identifying an unknown virus program according to claim 1, **characterized by** further comprising:
establishing an experience library to store procedure expressions from behavior data to result data of the virus programs, wherein the procedure expressions comprise behavior data or set of behavior data of the virus programs, result data, relationship data from behavior to result and a set of various permutations and combinations of the result data;
comparing the obtained behavior data or set of behavior data of the program under check with the behavior data or set of behavior data stored in the experience library, to obtain an operation result data resulted from the obtained behavior data or set of behavior data of the program under check; and
comparing the operation result data resulted from the obtained behavior data or set of behavior data of the program under check with the result data and the set of various permutations and combinations of the result data stored in the experience library, to judge whether the program under check is a virus program.

5. The method for identifying an unknown virus program according to claim 1, or 2, or 3, or 4, **characterized by** further comprising:
performing characteristic code identification to the program under check, to judge whether the program under check is a virus program.

6. The method for identifying an unknown virus program according to claim 3 or 4, **characterized by** further comprising:
permuting the obtained behavior data or set of behavior data of the program under check in the order of the behavior data or set of behavior data stored in the experience library.

7. The method for identifying an unknown virus program according to claim 1, or 2, or 3, or 4, **characterized in that** obtaining the behavior data of a program under check comprises:
obtaining devastating behavior data of known virus programs;
configuring a control processing program according to the devastating behavior data;
enabling the control processing program to gain control of the devastating behavior data;
when devastating behavior data of the program under check invokes the control processing program, recording, by the control processing program, the behavior data of the program under check.

8. The method for identifying an unknown virus program according to claim 1, or 2, or 3, or 4, **characterized by** further comprising:
if the program under check is judged to be a virus program, storing the behavior data of the program under check in behavior information of the experience library, storing result data corresponding to the behavior data of the program under check in result information of the experience library, and establishing a mapping relationship between the behavior data and the result data of the program under check.

9. The method for identifying an unknown virus program according to claim 1, or 2, or 3, or 4, **characterized by** further comprising:
if the program under check is judged to be a virus program, storing the behavior data or set of behavior data of the program under check as behavior data or a set of behavior data of the virus program.

10. The method for identifying an unknown virus program according to claim 9, **characterized by** further comprising:
storing devastating operation result data or a data set of permutations and combinations of the devastating operation result data of the virus program if the program under check is judged to be a virus program.

11. The method for identifying an unknown virus program according to claim 1, **characterized by** further comprising:
establishing a harmful behavior library to store the behavior data or set of behavior data of the virus programs.

12. A method for eliminating an unknown virus program, **characterized by** comprising:
obtaining behavior data of a program under check;
judging whether the program under check is a virus program according to the obtained behavior data or set of behavior data of the program under check and preset behavior data or set of behavior data of virus programs, and
eliminating the program under check if the program under check is judged to be a virus program.

13. The method for eliminating an unknown virus program according to claim 12, **characterized by** further comprising:
if the program under check is judged to be a virus program, establishing a reverse behavior operation step according to the obtained behavior data or set of behavior data of the program under check; and executing the reverse behavior operation step.
